# EUROPEAN PATENT SPECIFICATION

(11) **EP 1 528 652 B1**
(45) Date of publication and mention of the grant of the patent: **25.04.2012**
(21) Application number: 04025772.7
(22) Date of filing: 29.10.2004
(51) Int. Cl.: H02J 7/00, H02J 7/35

(54) **Portable independent electric power source**
Tragbare unabhängige elektrische Leistungsquelle
Source d'energie électrique portable et indépendante

(30) Priority: 30.10.2003 JP 2003370005; 09.09.2004 JP 2004262833
(43) Date of publication of application: 04.05.2005
(73) Proprietor: Sharp Kabushiki Kaisha, Osaka-shi, Osaka 545-8522 (JP)
(72) Inventor: Shimizu, Yukihiro, Shiki-gun Nara 636-0341 (JP)
(74) Representative: Müller - Hoffmann & Partner

(56) References cited:
- US-A- 6 034 506
- SULLIVAN R M ET AL: "AMPTE/CCE battery and charger performance" ENERGY CONVERSION ENGINEERING CONFERENCE, 1996. IECEC 96., PROCEEDINGS OF THE 31ST INTERSOCIETY WASHINGTON, DC, USA 11-16 AUG. 1996, NEW YORK, NY, USA,IEEE, US, vol. 1, 11 August 1996 (1996-08-11), pages 410-415, XP010197758 ISBN: 0-7803-3547-3
- CARRASCO J A ET AL: "ON THE APPLICATION OF SPACE TECHNOLOGY TO TERRESTRIAL POWER ELECTRONICS" PROCEEDINGS OF THE INTERNATIONAL POWER ELECTRONICS AND MOTION CONTROL CONFERENCE, vol. 3, 2 September 1996 (1996-09-02), pages 83-87, XP001039618

## Description

### BACKGROUND OF THE INVENTION

### Field of the Invention

The present invention relates to an independent power source system. In particular, the present invention relates to a small-sized independent source system for supplying electric power to electrical equipment.

### Description of the Background Art

Against the background of a growing interest in global environmental issues, a solar battery which directly converts solar light energy into electrical energy captures the spotlight since it serves as a clean electric generator emitting no carbon dioxide that is one factor of global warming.

Output electric power of the solar battery, however, depends on the illuminance and thus is unsteady. Accordingly, for the purpose of stably supplying electric power, the solar battery and a storage battery are combined into an independent source system storing electric power generated by the solar battery in the storage battery. This independent source system is now widely used.

A conventional independent source system (not shown) includes a solar battery, a storage battery storing DC electric power that is output from the solar battery, and an inverter unit converting the DC electric power that is output from the storage battery into AC electric power.

In this system, electric current generated by the solar battery flows to the storage battery or a load. When the output of the solar battery is insufficient due to any change of the load or when the solar battery generates no power for example in the nighttime, the storage battery discharges. On the contrary, the storage battery is charged when the load is small so that the output of the solar battery includes some surplus. In this way, the storage battery is adapted to the load. Here, a general-purpose lead-acid battery is used as the storage battery in order for the battery to be replaced easily when the battery is exhausted.

In parallel with the inverter unit, an AC electrical load is connected. The AC electrical load is operated with the AC power output from the inverter unit.

With the above-described configuration, the conventional independent source system can stably supply electric power to the load regardless of changes in illuminance. However, when a state in which the lead-acid battery of the system is insufficiently charged continues due to bad weather for example, inactive lead sulfate forms on the negative electrode plate, namely so-called sulfation occurs. Consequently, a problem of a decrease in capacity resulting in shortened lifetime arises.

A number of independent source systems with the aim of solving this problem to extend the lifetime of the storage battery have been proposed, for example, in Japanese Patent Laying-Open Nos. 2002-058175, 2000-341875 and 09-121461.

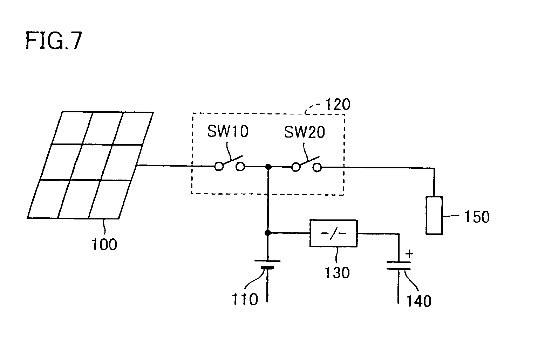

Fig. 7 is a block diagram showing a configuration of an independent source system disclosed in Japanese Patent Laying-Open No. 2002-058175.

Referring to Fig. 7, the independent source system includes a solar battery 100, a lead-acid battery 110, an electrical double-layer capacitor 140 serving as auxiliary charge means for lead-acid battery 110, a bidirectional converter 130 provided between lead-acid battery 110 and electrical double-layer capacitor 140, and a charge/discharge control circuit 120.

As shown in Fig. 7, charge/discharge control circuit 120 includes a charge control switch circuit SW10 for electrically connecting/separating solar battery 100 and lead-acid battery 110 to/from each other and a discharge control switch circuit SW20 for electrically connecting/separating lead-acid battery 110 and a load 150 to/from each other. In the daytime, charge/discharge control circuit 120 turns on charge control switch circuit SW10 so that solar battery 100 charges lead-acid battery 10. When lead-acid battery 110 is fully charged, charge control switch circuit SW 10 is turned off to stop the charge operation. In the nighttime, when charge/discharge control circuit 120 detects that solar battery 100 stops generating electric power, charge/discharge control circuit 120 turns on discharge control switch circuit SW20 for starting supply of electric power from lead-acid battery 110 to load 150. When the amount of power discharged from lead-acid battery 110 exceeds a preset value, discharge control switch SW20 is turned off for stopping the discharge operation of lead-acid battery 110 and thereby preventing over-discharge of lead-acid battery 110.

It is effective, for prevention of the aforementioned sulfation of the lead-acid battery, to overcharge the lead-acid battery at appropriate timing and thereby prevent accumulation of lead sulfate. However, for the independent source system utilizing natural energy, there is no guarantee that necessary electric power is available whenever overcharge is required.

In order to address this issue, the independent source system in Fig. 7 has electrical double-layer capacitor 140 for auxiliary charge of lead-acid battery 110. Specifically, the auxiliary charge of lead-acid battery 110 is done using charge control means provided in bidirectional converter 130 in such a manner that allows the charge amount of lead-acid battery 110 to be larger than a predetermined charge amount at an appropriate time.

Further, in order to allow electrical double-layer capacitor 140 to be fully charged all the time, bidirectional converter 130 is operated to subsidiarily charge electrical double-layer capacitor 140, so that the storage capacity of electrical double-layer capacitor 140 can be made as small as possible.

With the above-described arrangement, auxiliary charge of lead-acid battery 110 is done regularly. Accordingly, occurrence of sulfation is prevented and thereby the lifetime of lead-acid battery 110 can be prolonged.

Thus, the conventional independent source system as described above allows general electrical equipment to stably be used even in an area where no commercial electric power system has been well developed.

The storage battery included in the conventional independent source system, however, must have a capacity sufficient to stably drive the load even when the illuminance is inconstant. For such broadcast receivers as portable television and radio, the storage battery may have a relatively small capacity since the load is also small. In contrast, for such equipment as personal computer having a large load, the storage battery must have a large capacity for stably driving the large load for a long period of time. For example, in order to stably drive a load of 30 W for five hours, a storage battery with a capacity of approximately 12 Ah is required.

Accordingly, in order for one independent source system to supply electric power to various loads of electrical equipment, the system is naturally required to have a large-sized and heavy-weight storage battery, which constitutes one factor of hindrance to development of portable independent source systems.

For example, a user of a portable television would require portability of the independent source system while a user of a personal computer would require, rather than portability, a power supply ability of the independent source system that is enough to stably drive the personal computer for a long period of time. In the current state of the art, however, such requirements of users are not fully satisfied.

In "AMPTE/CCE battery and charger performance" by Sullivan R. M. et al., Energy Conversion Engineering Conference, 1996, IECEC 96., Proceedings of the 31^{st} Intersociety Washington, DC, USA, an independent source system receiving natural energy to generate electric power and driving a load with the electric power is disclosed. One solar array is present for receiving the natural energy to be stored in a redundant power supply consisting of two batteries, of which charging is controlled by one control unit.

In US Patent No. 6,034,506 a lithium ion sattelite battery charge control circuit is disclosed, wherein a plurality of battery cells of which the sattelite battery is constituted are switched between a series array and a parallel array in charging and discharging modes of the batteries.

### SUMMARY OF THE INVENTION

The invention is defined by an independent source system receiving natural energy with the technical features of claim 1.

The independent source system of the present invention is adaptable to a variety of electrical equipment and is portable according to user's selection.

According to the independent source system of the present invention, an independent source system receiving natural energy to generate electric power and driving a load with the electric power includes: a DC power supply generating and outputting a DC voltage; a first storage battery charged by the DC voltage and discharged to deliver first DC electric power; a second storage battery provided outside the independent source system and arbitrarily attachable/detachable to/from the independent source system, the second storage battery charged, when attached to the independent source system, by the DC voltage and discharged to deliver second DC electric power; an electric power supply unit provided between the first storage battery, the second storage battery and the load for selectively supplying the first DC electric power and the second DC electric power to the load; and a control unit controlling a charge operation of the first storage battery and the second storage battery by the DC power supply and controlling a discharge operation of the first storage battery and the second storage battery for supplying the DC electric power to the electric power supply unit. In the charge operation, the control unit selectively connects the DC power supply and the first storage battery and, after charge of the first storage battery is completed, selectively connects the DC power supply and the second storage battery. In the discharge operation, the control unit selectively connects the electric power supply unit and the second storage battery and, after discharge of the second storage battery is completed, selectively connects the electric power supply unit and the first storage battery.

Preferably, the electric power supply unit includes an electric power conversion unit selectively converting the first DC electric power and the second DC electric power into AC electric power to supply the AC electric power to the load.

Preferably, the control unit includes: a detection unit for detecting terminal-to-terminal voltage of the first storage battery and the second storage battery; and a first determination unit for determining, based on the detected terminal-to-terminal voltage, whether one of the storage batteries whose terminal-to-terminal voltage is detected is chargeable or not. When it is determined that the first storage battery is chargeable, the DC power supply and the first storage battery are selectively connected. When it is determined that the first storage battery is not chargeable, it is then determined whether the second storage battery is chargeable or not. When it is determined that the second storage battery is chargeable, the DC power supply and the second storage battery are selectively connected.

More preferably, the control unit further includes a second determination unit for determining, based on the detected terminal-to-terminal voltage, whether one of the storage batteries whose terminal-to-terminal voltage is detected is dischargeable or not. When it is determined that the second storage battery is dischargeable, the electric power conversion unit and the second storage battery are selectively connected. When it is determined that the second storage battery is not dischargeable, it is then determined whether the first storage battery is dischargeable or not. When it is determined that the first storage battery is dischargeable, the electric power conversion unit and the first storage battery are selectively connected.

Preferably, the independent source system further includes: a first switch circuit electrically connecting/separating the DC power supply and the first storage battery to/from each other; and a second switch circuit electrically connecting/separating the DC power supply and the second storage battery to/from each other. The control unit turns on the first switch circuit and turns off the second switch circuit for selectively connecting the DC power supply and the first storage battery and thereby charging the first storage battery by the DC voltage. After charge of the first storage battery is completed, the control unit turns off the first switch circuit and turns on the second switch circuit for selectively connecting the DC power supply and the second storage battery and thereby charging the second storage battery by the DC voltage. The independent source system further includes: a third switch circuit electrically connecting/separating the first storage battery and the electric power conversion unit to/from each other; and a fourth switch circuit electrically connecting/separating the second storage battery and the electric power conversion unit to/from each other. The control unit turns off the third switch circuit and turns on the fourth switch circuit for selectively connecting the second storage battery and the electric power conversion unit and thereby discharging the second storage battery to deliver the second DC electric power. After discharge of the second storage battery is completed, the control unit turns on the third switch circuit and turns off the fourth switch circuit for selectively connecting the first storage battery and the electric power conversion unit and thereby discharging the first storage battery to deliver the first DC electric power.

Preferably, the first storage battery is smaller in capacity than the second storage battery.

Preferably, the first storage battery includes nickel-hydrogen storage battery and the second storage battery includes lead-acid storage battery.

According to the present invention, the external storage battery is freely attachable/detachable so that electric power can stably be supplied to electrical equipment having various loads and the independent source system that is made portable according to any user's intended use can be implemented.

Further, in the charge/discharge operation of the internal storage battery and the external storage battery, electric power of the internal storage battery is kept as long as possible, so that the independent source system is available as a portable power source system at any timing designated by a user.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing a configuration of an independent source system according to an embodiment of the present invention.
Fig. 2 is a circuit configuration diagram illustrating in detail the independent source system in Fig. 1.
Fig. 3 is a circuit configuration diagram illustrating an example of the independent source system in Fig. 2.
Fig. 4 is a circuit configuration diagram illustrating another example of the independent source system in Fig. 2.
Fig. 5 is a flowchart illustrating a charge operation of the independent source system in Fig. 1.
Fig. 6 is a flowchart illustrating a discharge operation of the independent source system in Fig. 1.
Fig. 7 is a block diagram showing an exemplary configuration of a conventional independent source system.

### DESCRIPTION OF THE PREFERRED EMBODIMENTS

An embodiment of the present invention is hereinafter described in detail with reference to the drawings. It is noted that like components in the drawings are denoted by like reference characters and the description thereof is not repeated.

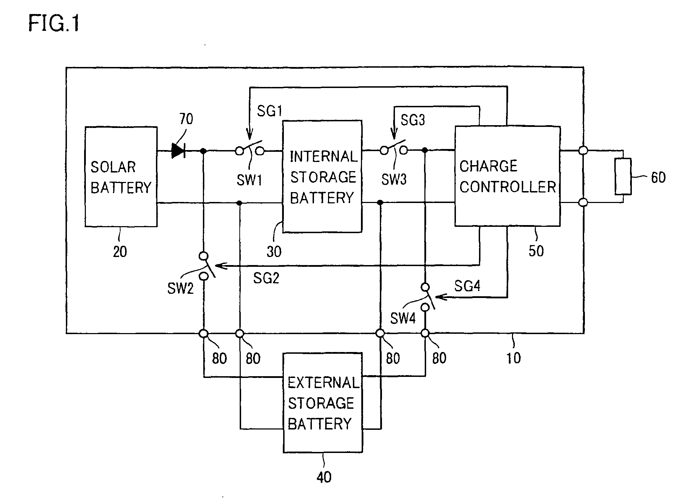

Fig. 1 is a block diagram showing a configuration of an independent source system according to the embodiment of the present invention.

Referring to Fig. 1, independent source system 10 includes a solar battery 20, a small-sized and small-capacity storage battery provided inside the system (hereinafter referred to as internal storage battery) 30, a large-capacity storage battery provided outside the system (hereinafter referred to as external battery) 40, a charge controller 50 supplying DC electric power that is output from each of the storage batteries to an electrical load 60, and a reverse-current protection diode 70.

Solar battery 20 has a module structure comprised of a plurality of solar cells connected in series, and has a voltage rating of 25 V and a power rating of 55 W. In this embodiment, for use in such consumer equipment as portable television, an integrated amorphous silicon solar battery formed on a thin-film substrate for example is employed.

Internal storage battery 30 is connected in parallel with solar battery 20 and stores DC electric power generated by solar battery 20. As internal storage battery 30, a light-weight lithium-ion battery having a capacity for example of 5.4 Ah and a high energy density is employed. The capacity of internal storage battery 30 is approximately one-fifth as large as that of a general lead-acid battery of the conventional independent source system. Thus, the independent source system of this embodiment has the storage battery that is dramatically reduced in size and weight so that the system is portable.

External storage battery 40 is connected in parallel with solar battery 20 and stores DC electric power generated by solar battery 20. As shown in Fig. 1, external storage battery 40 is provided outside independent source system 10 and is freely attachable to and detachable from independent source system 10 by means of connectors 80. As external storage battery 40, a relatively inexpensive lead-acid battery having a capacity of 12 Ah for example is employed in terms of cost. It is noted that external storage battery 40 of this embodiment has its capacity almost equal to the capacity of a storage battery provided in the conventional source system and is thus considerably larger than internal storage battery 30 in volume and weight.

Internal storage battery 30 and external storage battery 40 are electrically connected/isolated to/from solar battery 20 independently of each other by turning on/off switch circuits SVh1 and SW2 shown in Fig. 1. Since switch circuits SW1 and SW2 are turned on complementarily to each other, one of the two storage batteries is selectively connected to solar battery 20. Regarding control of this switching operation, a detailed description is given hereinlater.

Table 1 shows exemplary performances of internal storage battery 30 and external storage battery 40 employed in this embodiment.

**Table 1**

| | battery type | size | | weight | capacity |
|---|---|---|---|---|---|
| internal storage battery | nickel-hydrogen battery | 23 mm × 230 mm × 86 mm | | 1.1 kg | 5.4 Ah |
| external storage battery | lead-acid battery | 151 mm × 101 mm × 94 mm | | 4.0 kg | 12.0 Ah |
| | | | | | |

| | chargeable voltage [V] | charge stop voltage [V] | discharge start voltage [V] | discharge stop voltage [V] | |
|---|---|---|---|---|---|
| internal storage battery | 14.4 | 15.0 | 12.4 | 10.0 | |
| external storage battery | 14.2 | 14.8 | 12.4 | 10.0 | |

Referring to Table 1, internal storage battery 30 has charge characteristics that include a chargeable voltage of 14.4 V based on which it is determined whether the battery can be charged or not. When the voltage across the terminals (terminal-to-terminal voltage) of the battery becomes lower than the chargeable voltage, a charge operation is started.

When internal storage battery 30 is charged to reach a fully-charged state, a terminal-to-terminal voltage of 15.0 V is detected. This voltage value is hereinafter referred to as charge stop voltage based on which it is determined whether the charge operation is stopped or not.

External storage battery 40 also has charge characteristics that include a chargeable voltage of 14.2 V and a charge stop voltage of 14.8 V that are measured as the terminal-to-terminal voltage.

As for discharge characteristics, internal storage battery 30 has a discharge start voltage of 12.4 V based on which it is determined whether the battery can be discharged or not. When the terminal-to-terminal voltage of the battery is higher than the discharge start voltage, it is determined that the battery is dischargeable.

When internal storage battery 30 is discharged to reach an over-discharge state, a terminal-to-terminal voltage of 10.0 V is detected. This voltage value is hereinafter referred to as discharge stop voltage based on which it is determined whether the discharge operation is stopped or not.

External storage battery 40 also has a discharge start voltage of 12.4 V and a discharge stop voltage of 10.0 V that are measured as the terminal-to-terminal voltage.

As mentioned above, a user can freely attach/detach external storage battery 40 to/from independent source system 10 by means of connectors 80. Thus, when external storage battery 40 is detached from independent source system 10, independent source system 10 is reduced in size and weight and is accordingly made portable.

Specifically, when electrical load 60 of electrical equipment to be used is small, sufficient electric power can be supplied by solar battery 20 and internal storage battery 30. Then, external storage battery 40 is separated from independent source system 10. Independent source system 10 is thus made portable. Independent source system 10 in the portable state may be used for example as a power supply of such a broadcast receiver as portable television or radio for use outdoors, a power supply of such portable audio equipment as tape recorder or Mini Disc player, or a charger of a mobile phone.

In contrast, when independent source system 10 is to be used for driving large electrical load 60 of such equipment as portable personal computer, solar battery 20 and internal storage battery 30 cannot supply sufficient electric power. In this case, a user attaches external storage battery 40 of a large capacity to independent source system 10 by means of connectors 80. Thus, with solar battery 20, external storage battery 40 and internal storage battery 30, electrical load 60 can satisfactorily be driven.

Further, regardless of the size of electrical load 60, when the illuminance is insufficient and unsteady due to bad weather conditions, the power generation ability of solar battery 20 declines. Then, external storage battery 40 can be connected to keep steady power supply.

With this arrangement, it is ensured that electric power is stably supplied to electrical equipment having various loads while the portable independent source system can be constructed according to uses intended by users.

In order for independent source system 10 to be used in the portable form at any arbitrary time designated by a user, internal storage battery 30 has to store a predetermined amount of electric power all the time that is minimum necessary electric power for driving a load.

This embodiment accordingly proposes the independent source system of excellent portability by controlling the charge/discharge operation of storage batteries so that DC electric power stored by the internal storage battery is kept as long as possible.

Referring again to Fig. 1, independent source system 10 includes, as a unit for controlling a charge operation by solar battery 20 for each storage battery and a discharge operation of each storage battery for electrical load 60, switch circuits SW1 to SW4 as well as a control unit (not shown) provided in charge controller 50.

Switch circuit SW1 is turned on/off in response to a drive signal SG1 from the control unit of charge controller 50 to electrically connect/isolate solar battery 20 and internal storage battery 30 to/from each other. Switch circuit SW2 is turned on/off in response to a drive signal SG2 from charge controller 50 to electrically connect/isolate solar battery 20 and external storage battery 40 to/from each other. Switch circuit SW3 is turned on/off in response to a drive signal SG3 from charge controller 50 to electrically connect/isolate internal storage battery 30 and charge controller 50 to/from each other. Switch circuit SW4 is turned on/offin response to a drive signal SG4 from charge controller 50 to electrically connect/isolate external storage battery 40 to/from charge controller 50.

In this configuration, switch circuit SW1 and switch circuit SW2 are turned on/off complementarily to each other when a charge operation is done for selectively connecting one of internal storage battery 30 and external storage battery 40 to solar battery 20. Switch circuit SW3 and switch circuit SW4 are turned on/off complementarily to each other when a discharge operation is done for selectively connecting one of internal storage battery 30 and external storage battery 40 to charge controller 50. The turn on/off operation of these switch circuits SW1 to SW4 is controlled in response to drive signals SG1 to SG4 generated by the control unit in charge controller 50. Control of the charge/discharge operation is now described in detail.

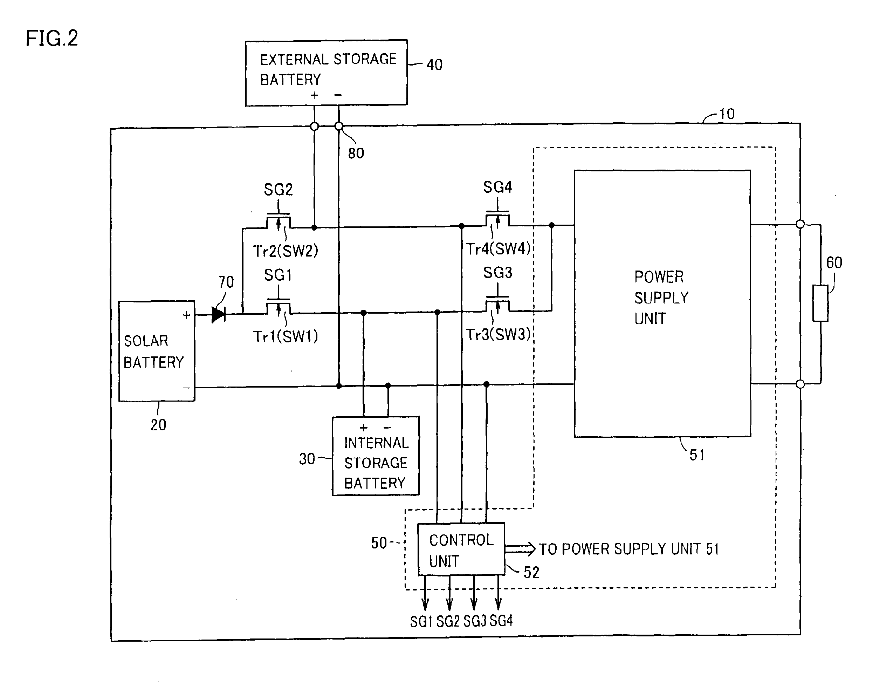

Fig. 2 is a circuit configuration diagram illustrating in detail independent source system 10 in Fig. 1.

Referring to Fig. 2, between the positive electrode of solar battery 20 and the positive electrode of internal storage battery 30, an N-channel transistor Tr1 serving as switch circuit SW1 in Fig. 1 is connected. Similarly, between the positive electrode of solar battery 20 and the positive electrode of external storage battery 40, an N-channel transistor Tr2 serving as switch circuit SW2 in Fig. 1 is connected. These N-channel transistors Tr1 and Tr2 are turned on in response to activation ("H (logical high)" level) of respective drive signals SG1 and SG2 to electrically connect the relevant storage battery and solar battery 20.

Further, between the positive electrode of internal storage battery 30 and a power supply unit 51 in charge controller 50, an N-channel transistor Tr3 serving as switch circuit SW3 in Fig. 1 is connected. Similarly, between the positive electrode of external storage battery 40 and power supply unit 51, an N-channel transistor Tr4 serving as switch circuit SW4 in Fig. 1 is connected. These N-channel transistors Tr3 and Tr4 are turned on in response to activation ("H" level) of respective drive signals SG3 and SG4 to electrically connect the relevant storage battery and power supply unit 51.

It is noted that switch circuits SW1 to SW4 are not limited to the N-channel transistors exemplarily illustrated in this embodiment, and any switching elements opened/closed in response to an electrical signal may be employed as the switch circuits.

As shown in Fig. 2, charge controller 50 includes power supply unit 51 supplying DC electric power that is output from a storage battery in a discharge state to electrical load 60 as well as control unit 52 generating drive signals SG1 to SG4 to control the charge/discharge operation as described above.

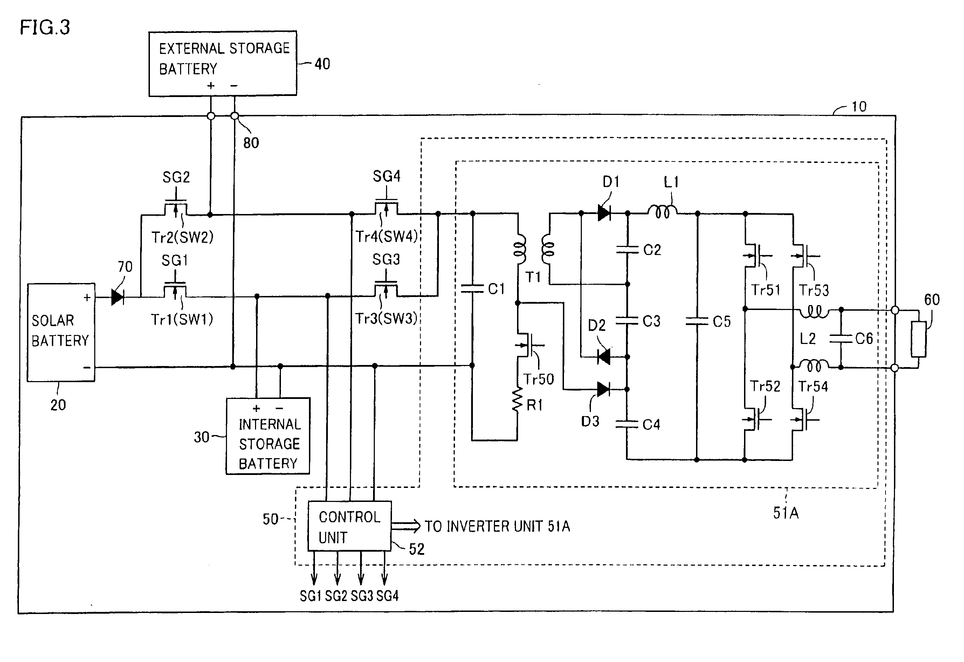

Power supply unit 51 may be constructed for example of an inverter unit 51 A as shown in Fig. 3 that converts DC electric power output from a storage battery into AC electric power and supplies the AC electric power to electrical load 60.

Fig. 3 is a circuit configuration diagram illustrating an example of independent source system 10 shown in Fig. 2. Fig. 3 differs from Fig. 2 in that power supply unit 51 of charge controller 50 in Fig. 2 is replaced with inverter unit 51A.

Referring to Fig. 3, inverter unit 51A is generally comprised of a voltage step-up transformer T1 for increasing DC voltage output from a storage battery, a rectifier circuit, a filter circuit, a self-excited inverter, and an output filter circuit.

The primary side of voltage step-up transformer T1 receives AC electric power into which DC electric power is converted by on/off control of an N-channel transistor Tr50, the voltage is increased so that it has a peak voltage of approximately 135 V, and the resultant AC electric power is supplied to the secondary side.

The AC electric power generated by voltage step-up transformer T1 is supplied to the rectifier circuit. The rectifier circuit includes diodes D1 and D2 connected to the secondary winding of transformer T1 in respective directions opposite to each other, as well as capacitors C2 and C3 connected in series between the cathode of diode D1 and the anode of diode D2.

The rectifier circuit is a full-wave rectifier circuit. Capacitors C2 and C3 are each charged to reach the peak value of the AC voltage to provide an output voltage of approximately 270 V that is approximately twice as high as the peak value of the input AC voltage.

Further, a capacitor C4 connected in series to capacitors C2 and C3 is charged to the terminal-to-terminal voltage of the storage battery (30 or 40) via a diode D3. Thus, the output DC voltage that is the sum of the terminal-to-terminal voltages of capacitors C2 to C4 is approximately 284 V.

The filter circuit includes an inductor L1 and a capacitor C5 to remove a high-frequency component from the obtained DC voltage to transmit the resultant D voltage to the self-excited inverter in the subsequent stage.

The self-excited inverter alternately turns on a switch circuit comprised of N-channel transistors Tr51 and Tr54 and a switch circuit comprised of N-channel transistors Tr52 and Tr53 to convert the input DC electric power into AC electric power with a frequency of 60 Hz. It is noted that open/close of the switch circuits is controlled by a control signal from control unit 52. The obtained AC electric power is supplied via the output filter circuit to electrical load 60. The output filter circuit is comprised of a choke coil L2 and a capacitor C6. Here, the DC electric power may be converted into the AC electric power through PWM (pulse-width modulation) control.

In addition, while power supply unit 51 in Fig. 2 is constructed of inverter unit 51 A in Fig. 3, power supply unit 51 may be constructed to supply the DC electric power that is output from the storage battery to electrical load 60 without converting the DC electric power.

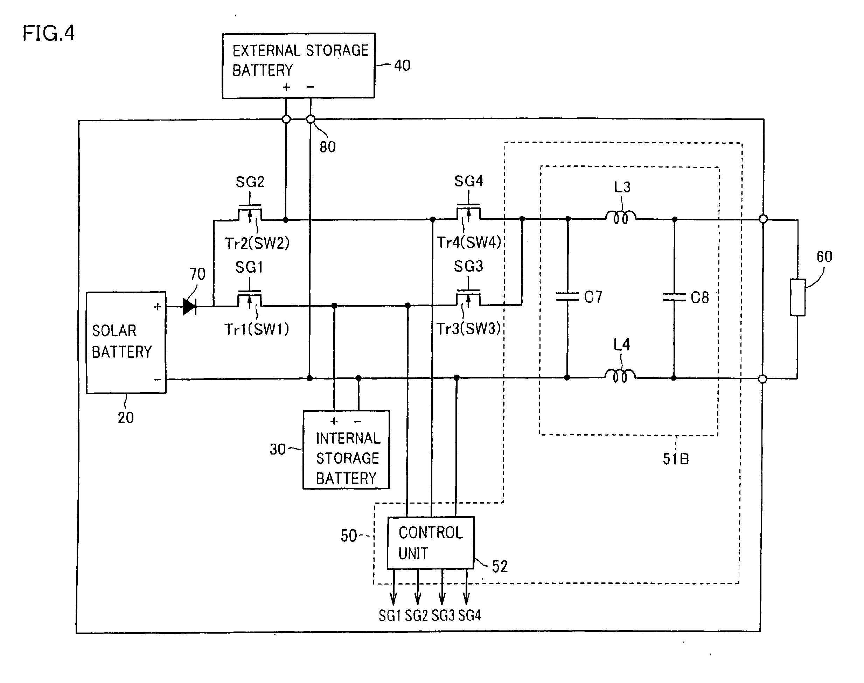

Fig. 4 is a circuit configuration diagram illustrating another example of independent source system 10 shown in Fig. 2. Fig. 4 differs from Fig. 2 in that power supply unit 51 in charge controller 50 shown in Fig. 2 is replaced with a power supply unit 51B.

Referring to Fig. 4, power supply unit 51B includes a filter circuit comprised of inductors L3 and L4 and capacitors C7 and C8.

The filter circuit removes a high-frequency component from DC electric power obtained from a storage battery in a discharge state and outputs the resultant DC electric power to electrical load 60. Here, a voltage step-up or step-down circuit (not shown) may be provided in power supply unit 51B to increase or decrease the voltage of the DC electric power to a desired voltage level and supply the resultant electric power to electrical load 60.

Moreover, power supply unit 51 may be constructed to selectively supply one of AC electric power and DC electric power to electrical load 60 so that electric power appropriate for connected electrical load 60 can be supplied.

A description is now given of charge/discharge control of each storage battery that is done by control unit 52 of charge controller 50. It is noted that the control hereinafter described is commonly done by respective control units 52 of independent source systems 10 shown in Figs. 2 to 4.

Referring again to Fig. 2, control unit 52 continuously detects the terminal-to-terminal voltage of internal storage battery 30 and that of external storage battery 40 and outputs drive signals SG1 to SG4 for doing/stopping charge/discharge of each storage battery.

Specifically, control unit 52 detects the terminal-to-terminal voltage of internal storage battery 30 to determine whether or not internal storage battery 30 is in a chargeable state. When the terminal-to-terminal voltage is equal to or lower than the chargeable voltage 14.4 V shown in Table 1, control unit 52 determines that internal storage battery 30 is chargeable and accordingly outputs activated ("H" level) drive signal SG1. After this, when control unit 52 detects that the terminal-to-terminal voltage of internal storage battery 30 reaches the charge stop voltage 15.0 V, namely internal storage battery 30 is fully charged, control unit 52 determines that the battery cannot be charged and accordingly outputs inactivated ("L (logical low)" level) drive signal SG1.

Control unit 52 also detects the terminal-to-terminal voltage of external storage battery 40 to determine whether or not external storage battery 40 is in a chargeable state. When the terminal-to-terminal voltage is equal to or lower than the chargeable voltage 14.2 V shown in Table 1, control unit 52 determines that external storage battery 40 is chargeable and accordingly outputs activated ("H" level) drive signal SG2. After this, when control unit 52 detects that the terminal-to-terminal voltage reaches the charge stop voltage 14.8 V, namely external storage battery 40 is fully charged, control unit 52 determines that the battery cannot be charged and accordingly outputs inactivated ("L" level) drive signal SG2. When external storage battery 40 is separated from independent source system 10, drive signal SG2 is fixed to "L" level.

The charge operation of internal storage battery 30 and the charge operation of external storage battery 40 are not simultaneously done. Instead, the charge operation of internal storage battery 30 is assigned higher priority. Specifically, when control unit 52 determines that internal storage battery 30 is chargeable, control unit 52 activates drive signal SG1 while complementarily inactivating drive signal SG2. Accordingly, internal storage battery 30 is connected to solar battery 20 and thus starts to be charged, while external storage battery 40 is forcefully separated regardless of its state of charge.

Further, when control unit 52 detects that the charge operation of internal storage battery 30 is completed, control unit 52 inactivates drive signal SG1 and detects the terminal-to-terminal voltage of external storage battery 40. When external storage battery 40 is chargeable, control unit 52 complementarily activates drive signal SG2. Accordingly, internal storage battery 30 is separated from solar battery 20 while external storage battery 40 is connected to solar battery 20 and starts to be charged.

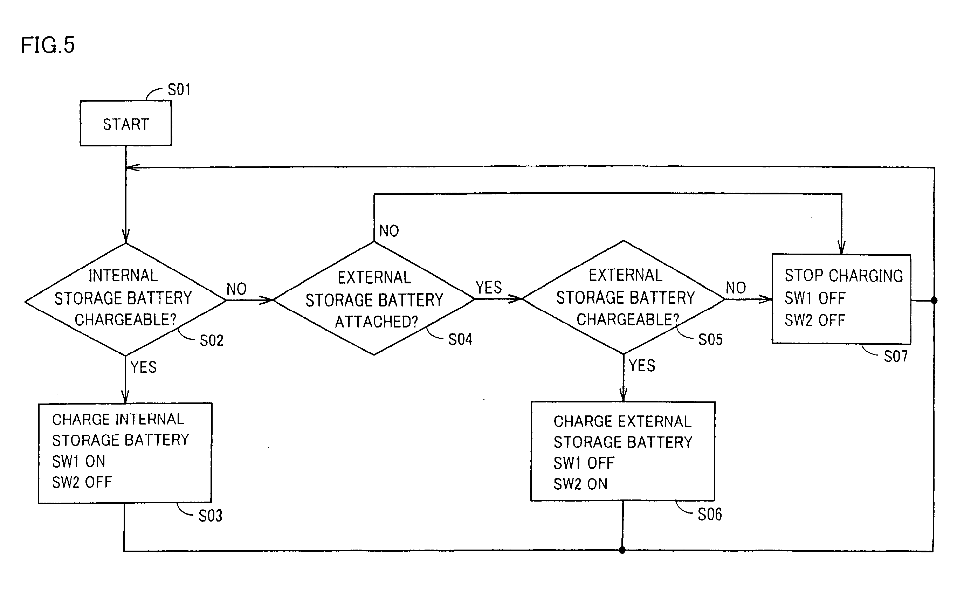

Fig. 5 is a flowchart illustrating the charge operation of independent source system 10 shown in Fig. 1.

It is noted here that the charge operation hereinafter described is performed on the precondition that a user of independent source system 10 determines whether or not external storage battery 40 is attached to the system based on the size of electrical load 60, the period of use and weather conditions for example. When the user determines that external storage battery 40 has to be attached, external storage battery 40 is attached through connectors 80. On the contrary, when the user determines that external storage battery 40 is unnecessary, independent source system 10 with no external storage battery 40 attached thereto is portable.

Initially, it is determined whether internal storage battery 30 is chargeable or not (step S02). Specifically, control unit 52 in charge controller 50 detects the terminal-to-terminal voltage of internal storage battery 30 and determines whether the detected voltage value is lower than the chargeable voltage 14.4 V or not.

In step S03, when the terminal-to-terminal voltage of internal storage battery 30 is lower than the chargeable voltage, control unit 52 outputs activated drive signal SG1 and inactivated drive signal SG2. According to respective drive signals, switch circuit SW1 is turned on and switch circuit SW2 is turned off so that internal storage battery 30 is selectively connected to solar battery 20. Accordingly, internal storage battery 30 is given priority over external storage battery 40 to store DC electric power generated by solar battery 20 (step S03).

When the charge operation of internal storage battery 30 is completed, external storage battery 40 is then charged. Specifically, when it is determined in step S04 that external storage battery 40 is attached, control unit 52 detects the terminal-to-terminal voltage of external storage battery 40 and determines whether the detected voltage value is lower than the chargeable voltage 14.2 V or not (step S05).

In step S05, when the terminal-to-terminal voltage of external storage battery 40 is lower than the chargeable voltage, control unit 52 outputs activated drive signal SG2 and inactivated drive signal SG1. According to respective drive signals, switch circuit SW2 is turned on and switch circuit SW1 is turned off so that external storage battery 40 is selectively connected to solar battery 20 to store the generated DC electric power (step S06).

The charge operation of external storage battery 40 is continued until the terminal-to-terminal voltage thereof attains the charge stop voltage 14.8 V. Finally, in step S05, when it is detected that the charge operation of external storage battery 40 is completed, control unit 52 inactivates both of these drive signals SG1 and SG2. Accordingly, both of switch circuits SW1 and SW2 are turned off and the storage batteries are each separated from solar battery 20 (step S07).

In this way, in the charge operation of independent source system 10, internal storage battery 30 is assigned priority over external storage battery 40 to be charged. After the charge operation of internal storage battery 30 is completed, external storage battery 40 is charged. Thus, in independent source system 10, DC electric power is speedily stored in internal storage battery 30 so that the independent source system 10 is made portable.

Referring again to Fig. 2, in parallel with the charge operation discussed above, control unit 52 detects the terminal-to-terminal voltage of internal storage battery 30 to determine whether internal storage battery 30 is in a dischargeable state or not. When the terminal-to-terminal voltage is equal to or higher than the discharge start voltage 12.4 V shown in Table 1, control unit 52 determines that internal storage battery 30 is dischargeable and accordingly outputs activated ("H" level) drive signal SG3. On the contrary, when the terminal-to-terminal voltage has already reached the discharge stop voltage 10.0 V and internal storage battery 30 is in an over-discharge state, control unit 52 determines that the battery is not dischargeable and accordingly outputs inactivated ("L" level) drive signal SG3.

Similarly, control unit 52 detects the terminal-to-terminal voltage of external storage battery 40 to determine whether external storage battery 40 is in a dischargeable state or not. Specifically, when the detected terminal-to-terminal voltage is equal to or higher than the discharge start voltage 12.4 V shown in Table 1, control unit 52 determines that external storage battery 40 is dischargeable and accordingly outputs activated ("H" level) drive signal SG4. On the contrary, when the terminal-to-terminal voltage has already reached the discharge stop voltage 10.0V and external storage battery 40 is in an over-discharge state, control unit 52 determines that external storage battery 40 cannot be discharged and accordingly outputs inactivated ("L" level) drive signal SG4. When external storage battery 40 is not attached to the system, drive signal SG4 is fixed to "L" level.

In contrast to the above-described charge operation, the discharge operation of internal storage battery 30 and external storage battery 40 is performed in such a manner that assigns priority to external storage battery 40. Specifically, when control unit 52 determines that external storage battery 40 is dischargeable, control unit 52 activates drive signal SG4 while complementarily inactivating drive signal SG3. Accordingly, external storage battery 40 is connected to power supply unit 51 of charge controller 50 to start to discharge while internal storage battery 30 is forcefully separated.

Further, when control unit 52 detects that external storage battery 40 is in an over-discharge state, control unit 52 inactivates drive signal SG4 and detects the terminal-to-terminal voltage of internal storage battery 30. When internal storage battery 30 is dischargeable, drive signal SG3 is complementarily activated. Thus, external storage battery 40 is separated from charge controller 50 while internal storage battery 30 is connected to charge controller 50 to start to discharge.

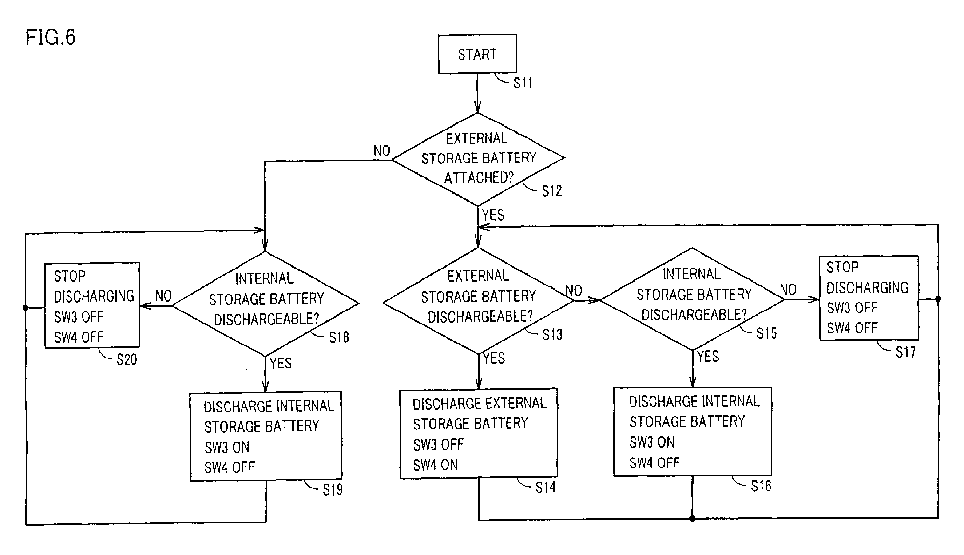

Fig. 6 is a flowchart illustrating the discharge operation of independent source system 10 shown in Fig. 1.

The discharge operation is performed on the precondition that a user of independent source system 10 determines whether or not external storage battery 40 is necessary based on the size of electrical load 60, the period of use and weather conditions for example. When the user determines that external storage battery 40 has to be attached, external storage battery 40 is attached through connectors 80. On the contrary, when the user determines that external storage battery 40 is unnecessary, independent source system 10 with no external storage battery 40 attached thereto is portable.

Initially, it is confirmed whether or not external storage battery 40 is attached to independent source system 10 (step S12).

In step S12, when it is confirmed that external storage battery 40 is attached, it is then determined whether or not external storage battery 40 is dischargeable (step S13). Specifically, control unit 52 in charge controller 50 detects the terminal-to-terminal voltage of external storage battery 40 to determine whether or not the detected voltage value is higher than the discharge start voltage 12.4 V.

In step S13, when the terminal-to-terminal voltage of external storage battery 40 is higher than the discharge start voltage, control unit 52 outputs activated drive signal SG4 and inactivated drive signal SG3. Accordingly, switch circuit SW4 is turned on while switch circuit SW3 is turned off so that external storage battery 40 is selectively connected to charge controller 50 and is thus assigned priority over internal storage battery 30 to supply electric power to electrical load 60 (step S14).

When external storage battery 40 reaches an over-discharge state and the terminal-to-terminal voltage attains the discharge stop voltage 10.0 V, the discharge operation of internal storage battery 30 is then performed. Control unit 52 detects the terminal-to-terminal voltage of internal storage battery 30 to determine whether or not the detected voltage value is higher than the discharge start voltage 12.4 V (step S15).

In step S15, when the terminal-to-terminal voltage of internal storage battery 30 is higher than the discharge start voltage, control unit 52 outputs activated drive signal SG3 and inactivated drive signal SG4 so that switch circuit SW3 is turned on while switch circuit SW4 is turned off. Accordingly, internal storage battery 30 is selectively connected to charge controller 50 to supply electric power to electrical load 60 (step S16).

Finally, in step S16, when it is detected that internal storage battery 30 is in an over-discharge state, control unit 52 inactivates both of drive signals SG3 and SG4. Both of switch circuits SW3 and SW4 are accordingly turned off to separate respective storage batteries from charge controller 50 (step S17).

In the discharge operation of independent source system 10 as discussed above, external storage battery 40 is assigned priority over internal storage battery 30 to discharge. After the discharge operation of external storage battery 40 is completed, the discharge operation of internal storage battery 30 is done. In independent source system 10, since the DC electric power stored by internal storage battery 30 is kept as long as possible, the system can promptly make the transition to the portable state.

It is noted that the solar battery employed in the independent source system of this embodiment is not limited to the illustrated amorphous silicon solar battery, and such an arbitrary solar battery as a solar battery of crystalline silicon or a compound semiconductor solar battery may be used as the solar battery. Moreover, instead of the solar battery, such a power generator as fuel cell may be used.

As heretofore discussed, according to the embodiment of the present invention, the external storage battery is freely attachable/detachable so that electric power can stably be supplied to electrical equipment having various loads and the independent source system that is made portable according to any user's intended use can be implemented.

Further, in the charge/discharge operation of the internal storage battery and the external storage battery, DC electric power stored by the internal storage battery is kept as long as possible, so that the independent source system is available as a portable power source system at any timing designated by a user.

Moreover, since the solar battery is used as power generation means, it is unnecessary to carry any fuel for generating electric power so that portability is further improved.

Although the present invention has been described and illustrated in detail, it is clearly understood that the same is by way of illustration and example only and is not to be taken by way of limitation, the spirit and scope of the present invention being limited only by the scope of the appended claims.

## Claims

1. An independent source system receiving natural energy to generate electric power and driving a load with the electric power, comprising:
a DC power supply (20) generating and outputting a DC voltage;
a first storage battery (30) arranged to be charged by said DC voltage and discharged to deliver first DC electric power;
a second storage battery (40) provided outside said independent source system and arbitrarily attachable/detachable to/from said independent source system, said second storage battery (40) arranged to be charged, when attached to said independent source system, by said DC voltage and discharged to deliver second DC electric power;
an electric power supply unit (51) provided between said first storage battery (30), said second storage battery (40) and the load (60) for selectively supplying said first DC electric power and said second DC electric power to said load (60); and
a control unit (52) for controlling a charge operation of said first storage battery and said second storage battery (40) by said DC power supply (20) and for controlling a discharge operation of said first storage battery (30) and said second storage battery (40) for supplying the DC electric power to said electric power supply unit (51).
wherein said control unit (52) is configured to, during said charge operation, selectively connect said DC power supply (20) and said first storage battery (30) and, after charge of said first storage battery (30) is completed, selectively connect said DC power supply (20) and said second storage battery (40), and
said control unit (52) is further configured to, during said discharge operation, selectively connect said electric power supply unit (51) and said second storage battery (40) and, after discharge of said second storage battery (40) is completed, selectively connect said electric power supply unit (51) and said first storage battery (30)

2. The independent source system according to claim 1, wherein
said electric power supply unit (51) includes an electric power conversion unit for (51A) selectively converting said first DC electric power and said second DC electric power into AC electric power to supply said AC electric power to said load (60).

3. The independent source system according to claim 2, wherein
said control unit (52) includes:
detection means for detecting terminal-to-terminal voltage of said first storage battery (30) and said second storage battery (40); and
first determination means for determining, based on said detected terminal-to-terminal voltage, whether one of said storage batteries whose teminal-to-terminal voltage is detected is chargeable or not and, when it is determined that said first storage battery (30) is not chargeable, determining whether said second storage battery (40) is chargeable or not, said control unit being further configured to:
when it is determined that said first storage battery (30) is chargeable, selectively connect said DC power supply (20) and said first storage battery (30), and
when it is determined that said second storage battery (40) is chargeable, selectively connect said DC power supply (20) and said second storage battery (40).

4. The independent source system according to claim 3, wherein
said control unit (52) further includes second determination means for determining, based on said detected terminal-to-terminal voltage, whether one of said storage batteries whose terminal-to-terminal voltage is detected is dischargeable or not and when it is determined that said second storage battery (40) is not dischargeable, determining whether said first storage battery (30) is dischargeable or not, said control unit being further configured to:
when it is determined that said second storage battery (40) is dischargeable, selectively connect, said electric power conversion unit (51A) and said second storage battery (40), and
when it is determined that said first storage battery (30) is dischargeable selectively connect said electric power conversion unit (51A) and said first storage battery (30).

5. The independent source system according to claim 4, further comprising:
a first switch circuit (SW1) for electrically connecting/separating said DC power supply (20) and said first storage battery (30) to/from each other; and
a second switch circuit (SW2) for electrically connecting/separating said DC power supply (20) and said second storage battery (40) to/from each other,
said control unit (52) being further configured to turn on said first switch circuit (SW1) and turn off said second switch circuit (SW2) for selectively connecting said DC power supply (20) and said first storage battery (30) and thereby charging said first storage battery (30) by said DC voltage and,
said control unit being further configured to after charge of said first storage battery (30) is completed, (52) turning off said first switch circuit (SW1) and turning on said second switch circuit (SW2) for selectively connecting said DC power supply (20) and said second storage battery (40) and thereby charging said second storage battery (40) by said DC voltage, and
said independent source system further comprising:
a third switch circuit (SW3) for electrically connecting/separating said first storage battery (30) and said electric power conversion unit (51A) to/from each other; and
a fourth switch circuit (SW4) for electrically connecting/separating said second storage battery (40) and said electric power conversion unit (51A) to/from each other,
said control unit (52) being further configured to turn off said third switch circuit (SW3) and turn on said fourth switch circuit (SW4) for selectively connecting said second storage battery (40) and said electric power conversion unit (51A) and thereby discharging said second storage battery (40) to deliver said second DC electric power and,
said control unit being further configured to (52), after discharge of said second storage battery (40) is completed, turn on said third switch circuit (SW3) and turn off said fourth switch circuit (SW4) for selectively connecting said first storage battery (30) and said electric power conversion unit (51A) and thereby discharging said first storage battery (40) to deliver said first DC electric power.

6. The independent source system according to claim 5, wherein
said first storage battery (30) is smaller in capacity than said second storage battery (40).

7. The independent source system according to claim 6, wherein
said first storage battery (30) includes nickel-hydrogen storage battery and said second storage battery (40) includes lead-acid storage battery.

## Patentansprüche

1. Unabhängiges Quellensystem zum Empfangen natürlicher Energie, um elektrische Leistung zu erzeugen und um mit der elektrischen Leistung eine Last anzutreiben, mit:
einer Gleichspannungsleistungsquelle (20) zum Erzeugen und Ausgeben einer Gleichspannung;
einer ersten Speicherbatterie (30), die dazu ausgelegt ist, durch die Gleichspannung geladen zu werden und entladen zu werden, um eine erste elektrische Gleichspannungsleistung auszugeben;
einer zweiten Speicherbatterie (40), die außerhalb des unabhängigen Quellensystems vorgesehen ist und beliebig an dem unabhängigen Quellensystem befestigbar und von diesem abnehmbar ist, wobei die zweite Speicherbatterie (40) dazu ausgelegt ist, dann, wenn sie an dem unabhängigen Quellensystem befestigt ist, durch die Gleichspannung geladen zu werden und entladen zu werden, um eine zweite elektrische Gleichspannungsleistung auszugeben;
einer Einheit (51) zur Versorgung mit elektrischer Leistung, die zwischen der ersten Speicherbatterie (30), der zweiten Speicherbatterie (40) und der Last (60) vorgesehen ist, um der Last (60) wahlweise die erste elektrische Gleichspannungsleistung und die zweite elektrische Gleichspannungsleistung zuzuführen; und
einer Steuereinheit (52) zum Steuern einer Ladeoperation der ersten Speicherbatterie und der zweiten Speicherbatterie (40) durch die Gleichspannungsleistungsversorgung (20) und zum Steuern einer Entladeoperation der ersten Speicherbatterie (30) und der zweiten Speicherbatterie (40), um der Einheit (51) zur Versorgung mit elektrischer Leistung die elektrische Gleichspannungsleistung zuzuführen,
wobei die Steuereinheit (52) konfiguriert ist, um während der Ladeoperation wahlweise die Gleichspannungsleistungsversorgung (20) und die erste Speicherbatterie (30) zu verbinden und, nachdem das Laden der ersten Speicherbatterie (30) abgeschlossen ist, wahlweise die Gleichspannungsleistungsversorgung (20) und die zweite Speicherbatterie (40) zu verbinden; und
die Steuereinheit (52) ferner konfiguriert ist, um während der Entladeoperation wahlweise die Einheit (51) zur Versorgung mit elektrischer Leistung und die zweite Speicherbatterie (40) zu verbinden und, nachdem das Entladen der zweiten Speicherbatterie (40) abgeschlossen ist, wahlweise die Einheit (51) zur Versorgung mit elektrischer Leistung und die erste Speicherbatterie (30) zu verbinden.

2. Unabhängiges Quellensystem nach Anspruch 1, wobei
die Einheit (51) zur Versorgung mit elektrischer Leistung eine Einheit (51) zur Umsetzung von elektrischer Leistung umfasst, um wahlweise die erste elektrische Gleichspannungsleistung und die zweite elektrische Gleichspannungsleistung in eine elektrische Wechselspannungsleistung umzusetzen, um der Last (60) die elektrische Wechselspannungsleistung zuzuführen.

3. Unabhängiges Quellensystem nach Anspruch 2, wobei
die Steuereinheit (52) enthält:
Detektionsmittel, um eine Anschlussstift/Anschlussstift-Spannung der ersten Speicherbatterie (30) und der zweiten Speicherbatterie (40) zu detektieren; und
erste Bestimmungsmittel, um anhand der detektierten Anschlussstift/Anschlussstift-Spannung zu bestimmen, ob eine der Speicherbatterien, deren Anschlussstift/Anschlussstift-Spannung detektiert wird, aufladbar ist oder nicht, und um dann, wenn bestimmt wird, dass die erste Speicherbatterie (30) nicht aufladbar ist, zu bestimmen, ob die zweite Speicherbatterie (40) aufladbar ist oder nicht, und wobei die Steuereinheit ferner konfiguriert ist, um:
dann, wenn bestimmt wird, dass die erste Speicherbatterie (30) aufladbar ist, wahlweise die Gleichspannungsleistungsversorgung (20) und die erste Speicherbatterie (30) zu verbinden, und
dann, wenn bestimmt wird, dass die zweite Speicherbatterie (40) aufladbar ist, wahlweise die Gleichspannungsleistungsversorgung (20) und die zweite Speicherbatterie (40) zu verbinden.

4. Unabhängiges Quellensystem nach Anspruch 3, wobei
die Steuereinheit (52) ferner zweite Bestimmungsmittel enthält, um anhand der detektierten Anschlussstift/Anschlussstift-Spannung zu bestimmen, ob eine der Speicherbatterien, deren Anschlussstift/Anschlussstift-Spannung detektiert wird, entladbar ist oder nicht, und um dann, wenn bestimmt wird, dass die zweite Speicherbatterie (40) nicht entladbar ist, zu bestimmen, ob die erste Speicherbatterie (30) entladbar ist oder nicht, wobei die Steuereinheit ferner konfiguriert ist, um
dann, wenn bestimmt wird, dass die zweite Speicherbatterie (40) entladbar ist, wahlweise die Einheit (51) zur Umsetzung von elektrischer Leistung und die zweite Speicherbatterie (40) zu verbinden, und
dann, wenn bestimmt wird, dass die erste Speicherbatterie (30) entladbar ist, wahlweise die Einheit (51) zur Umsetzung von elektrischer Leistung und die erste Speicherbatterie (30) zu verbinden.

5. Unabhängiges Quellensystem nach Anspruch 4, ferner mit:
einer ersten Schaltschaltung (SW1) zum elektrischen Verbinden/Trennen der Gleichspannungsleistungsversorgung (20) und der ersten Speicherbatterie (30) miteinander/voneinander; und
einer zweiten Schaltschaltung (SW2) zum elektrischen Verbinden/Trennen der Gleichspannungsleistungsversorgung (20) und der zweiten Speicherbatterie (40) miteinander/voneinander,
wobei die Steuereinheit (52) ferner konfiguriert ist, um die erste Schaltschaltung (SW1) zu schließen und die zweite Schaltschaltung (SW2) zu öffnen, um wahlweise die Gleichspannungsleistungsversorgung (20) und die erste Speicherbatterie (30) zu verbinden, um **dadurch** die erste Speicherbatterie (30) mit der Gleichspannung zu laden, und
die Steuereinheit (52) ferner konfiguriert ist, um, nachdem das Laden der ersten Speicherbatterie (30) abgeschlossen ist, die erste Schaltschaltung (SW1) zu öffnen und die zweite Schaltschaltung (SW2) zu schließen, um wahlweise die Gleichspannungsleistungsversorgung (20) und die zweite Speicherbatterie (40) zu verbinden und um **dadurch** die zweite Speicherbatterie (40) mit der Gleichspannung zu laden, und
das unabhängige Quellensystem ferner enthält:
eine dritte Schaltschaltung (SW3) zum elektrischen Verbinden/Trennen der ersten Speicherbatterie (30) und der Einheit (51) zur Umsetzung von elektrischer Leistung miteinander/voneinander; und
eine vierte Schaltschaltung (SW4) zum elektrischen Verbinden/Trennen der zweiten Speicherbatterie (40) und der Einheit (51) zur Umsetzung von elektrischer Leistung miteinander/voneinander,
wobei die Steuereinheit (52) ferner konfiguriert ist, um die dritte Schaltschaltung (SW3) zu öffnen und die vierte Schaltschaltung (SW4) zu schließen, um wahlweise die zweite Speicherbatterie (40) und die Einheit (51) zur Umsetzung von elektrischer Leistung zu verbinden und um **dadurch** die zweite Speicherbatterie (40) zu entladen, um die zweite elektrische Gleichspannungsleistung auszugeben, und
die Steuereinheit (52) ferner konfiguriert ist, um, nachdem das Entladen der zweiten Speicherbatterie (40) abgeschlossen ist, die dritte Schaltschaltung (SW3) zu schließen und die vierte Schaltschaltung (SW4) zu öffnen, um wahlweise die erste Speicherbatterie (30) und die Einheit (51) zur Umsetzung von elektrischer Leistung zu verbinden und um **dadurch** die erste Speicherbatterie (40) zu entladen, um die erste elektrische Gleichspannungsleistung zu liefern.

6. Unabhängiges Quellensystem nach Anspruch 5, wobei
die erste Speicherbatterie (30) eine geringere Kapazität als die zweite Speicherbatterie (40) hat.

7. Unabhängiges Leistungssystem nach Anspruch 6,
wobei die erste Speicherbatterie (30) eine Nickel-Wasserstoff-Speicherbatterie enthält und die zweite Speicherbatterie (40) eine Bleisäure-Speicherbatterie enthält.

## Revendications

1. Système de source indépendante, recevant une énergie naturelle, pour générer de l'énergie électrique et commander une charge au moyen de l'énergie électrique, comportant :
une alimentation à courant continu (20) générant et produisant une tension continue ;
une première batterie de stockage (30), conçue pour être chargée par ladite tension continue et déchargée pour produire la première énergie électrique continue ;
une deuxième batterie de stockage (40), placée à l'extérieur dudit système de source indépendante, et montable/démontable de manière arbitraire sur ledit/dudit système de source indépendante, ladite deuxième batterie de stockage (40) étant conçue pour être chargée, lorsqu'elle est solidaire dudit système de source indépendante, par ladite tension continue, et déchargée pour produire une seconde énergie électrique à courant continu ;
une unité d'alimentation en énergie électrique (51), placée entre ladite première batterie de stockage (30), ladite deuxième batterie de stockage (40) et la charge (60) pour alimenter de manière sélective ladite charge (60) au moyen de ladite première énergie électrique à courant continu et de ladite deuxième énergie électrique à courant continu ; et
une unité de commande (52), destinée à commander une opération de charge de ladite première batterie de stockage et de ladite deuxième batterie de stockage (40) au moyen de ladite alimentation électrique à courant continu (20), et pour commander une opération de décharge de ladite première batterie de stockage (30) et de ladite deuxième batterie de stockage (40) pour alimenter ladite unité d'alimentation électrique (51) au moyen de l'énergie électrique à courant continu,
dans lequel ladite unité de commande (52) est configurée pour, pendant ladite opération de charge, relier sélectivement ladite alimentation électrique à courant continu (20) et ladite première batterie de stockage (30), et, après réalisation de la charge de ladite première batterie de stockage (30), relier sélectivement ladite alimentation électrique à courant continu (20) et ladite deuxième batterie de stockage (40), et
ladite unité de commande (52) est en outre configurée pour, pendant ladite opération de décharge, relier sélectivement ladite unité d'alimentation électrique (51) et ladite deuxième batterie de stockage (40), et, après réalisation de la décharge de ladite deuxième batterie de stockage (40), relier sélectivement ladite unité d'alimentation électrique (51) et ladite première batterie de stockage (30).

2. Système de source indépendante selon la revendication 1, dans lequel
ladite unité d'alimentation électrique (51) comporte une unité de conversion d'énergie électrique pour (51A) convertir sélectivement ladite énergie électrique à courant continu et ladite deuxième énergie électrique à courant continu en une énergie électrique à courant alternatif afin d'alimenter ladite charge (60) en énergie électrique à courant alternatif.

3. Système de source indépendante selon la revendication 2, dans lequel
ladite unité de commande (52) comporte :
un moyen de détection destiné à détecter une tension de borne à borne de ladite première batterie de stockage (30) et de ladite deuxième batterie de stockage (40) ; et
un premier moyen de détermination destiné à déterminer, en fonction de ladite tension de borne à borne détectée, si l'une desdites batteries de stockage dont la tension de borne à borne est détectée peut être chargée ou non, et, lorsqu'il est déterminé que ladite première batterie de stockage (30) ne peut pas être chargée, déterminer si ladite deuxième batterie de stockage (40) peut être chargée ou non, ladite unité de commande étant en outre configurée pour :
lorsqu'il est déterminé que ladite première batterie de stockage (30) peut être chargée, relier sélectivement ladite alimentation électrique à courant continu (20) et ladite première batterie de stockage (30), et
lorsqu'il est déterminé que ladite deuxième batterie de stockage (40) peut être chargée, relier sélectivement ladite alimentation électrique à courant continu (20) et ladite deuxième batterie de stockage (40).

4. Système de source indépendante selon la revendication 3, dans lequel
ladite unité de commande (52) comporte en outre un deuxième moyen de détermination pour déterminer, en se basant sur ladite tension de borne à borne détectée, si l'une desdites batteries de stockage dont la tension de borne à borne détectée peut être déchargée ou non, et
lorsqu'il est déterminé que ladite deuxième batterie de stockage (40) ne peut pas être déchargée, déterminer si ladite première batterie de stockage (30) peut être déchargée ou non, ladite unité de commande étant en outre configurée pour :
lorsqu'il est déterminé que ladite deuxième batterie de stockage (40) peut être déchargée, relier sélectivement ladite unité de conversion d'énergie électrique (51A) et ladite deuxième batterie de stockage (40), et
lorsqu'il est déterminé que ladite première batterie de stockage (30) peut être déchargée, relier sélectivement ladite unité de conversion d'énergie électrique (51A) et ladite première batterie de stockage (30).

5. Système de source indépendante selon la revendication 4, comportant en outre :
un premier circuit de commutation (SW1), chargé de connecter/séparer électriquement ladite alimentation électrique à courant continu (20) et ladite première batterie de stockage (30) l'une de l'autre ; et
un deuxième circuit de commutation (SW2), chargé de connecter/séparer électriquement ladite alimentation électrique à courant continu (20) et ladite deuxième batterie de stockage (30) l'une de l'autre,
ladite unité de commande (52) étant en outre configurée pour activer ledit premier circuit de commutation (SW1) et désactiver ledit deuxième circuit de commutation (SW2) pour relier sélectivement ladite alimentation électrique à courant continu (20) et ladite première batterie de stockage (30), et charger, par conséquent, ladite première batterie de stockage (30) au moyen de ladite tension continue, et
ladite unité de commande (52) étant en outre configurée pour désactiver ledit premier circuit de commutation (SW1) et activer ledit deuxième circuit de commutation (SW2) pour relier sélectivement ladite alimentation électrique à courant continu (20) et ladite deuxième batterie de stockage (40), et charger par conséquent ladite deuxième batterie de stockage (40) au moyen de ladite tension continue, et
ledit système de source indépendante comportant en outre :
un troisième circuit de commutation (SW3), reliant/séparant électriquement ladite première batterie de stockage (30) et ladite unité de conversion d'énergie électrique (51A) l'une par rapport à l'autre ; et
un quatrième circuit de commutation (SW4), reliant/séparant électriquement ladite deuxième batterie de stockage (40) et ladite unité de conversion d'énergie électrique (51A) l'une par rapport à l'autre ;
ladite unité de commande (52) étant en outre configurée pour désactiver ledit troisième circuit de commutation (SW3) et activer ledit quatrième circuit de commutation (SW4) pour relier sélectivement ladite deuxième batterie de stockage (40) et ladite unité de conversion d'énergie électrique (51A) et, par conséquent, décharger ladite deuxième batterie de stockage (40) pour produire ladite deuxième énergie électrique à courant continu, et
ladite unité de commande (52), étant en outre configurée pour, après réalisation de la décharge de ladite deuxième batterie de stockage (40), activer ledit troisième circuit de commutation (SW3) et désactiver ledit quatrième circuit de commutation (SW4) pour relier sélectivement ladite première batterie de stockage (30) et ladite unité de conversion d'énergie électrique (51A), et par conséquent décharger ladite première batterie de stockage (40) pour produire ladite première énergie électrique à courant continu.

6. Système de source indépendante selon la revendication 5, dans lequel
ladite première batterie de stockage (30) possède une capacité plus faible que ladite deuxième batterie de stockage (40).

7. Système de source indépendante selon la revendication 6, dans lequel
ladite première batterie de stockage (30) inclut une batterie de stockage nickel-hydrogène et ladite deuxième batterie de stockage (40) inclut une batterie de stockage au plomb.
